# EUROPEAN PATENT SPECIFICATION

(11) **EP 3 564 035 B1**
(45) Date of publication and mention of the grant of the patent: **30.06.2021**
(21) Application number: 19172356.8
(22) Date of filing: 02.05.2019
(51) Int. Cl.: B33Y 30/00, B33Y 40/00, B29C 64/153, B29C 64/165, B29C 64/35

(54) **FIXTURE AND METHOD OF CLEANING ADDITIVE MANUFACTURING MACHINE COMPONENTS**
VORRICHTUNG UND VERFAHREN ZUR REINIGUNG VON MASCHINENKOMPONENTEN FÜR GENERATIVE FERTIGUNG
ACCESSOIRE ET PROCÉDÉ DE NETTOYAGE DE COMPOSANTS DE MACHINE DE FABRICATION ADDITIVE

(30) Priority: 02.05.2018 WO PCT/US2018/969440
(43) Date of publication of application: 06.11.2019
(73) Proprietor: Hamilton Sundstrand Corporation, Charlotte, NC 28217-4578 (US)
(72) Inventor: MADINGER, Alexander, Hartford, CT 06106 (US); GIULIETTI, Diana, Cambridge, MA 02139 (US)
(74) Representative: Dehns

(56) References cited:
- EP-A2- 1 552 905
- CN-A- 105 562 689
- GB-A- 2 550 341
- US-A1- 2016 067 929

## Description

### BACKGROUND

Exemplary embodiments pertain to the art of additive manufacturing. In particular, the present disclosure relates to cleaning of a recoater apparatus of an additive manufacturing machine.

Additive manufacturing methods and apparatuses are utilized to manufacture components of selected shapes or sizes, most often by deposition of a powder material. In one such method, referred to as laser powder bed fusion (LPBF), a recoater is utilized to compact the deposited material powder, enabling better heat transfer in the deposited powder, and allowing for steeper unsupported angles in the component and improved uniformity in deposited layers of material powder.

In other apparatuses, the recoater is a cylindrical element, more specifically described as a rolling style hard recoater that is advanced over the deposited material to compact the material as it rolls. The recoater becomes dirty and/or damaged with use, deterring its usefulness or even making the use of the recoater a liability. Debris on the recoater can cause uneven powder spreading, scratching of build plates and the potential for debris to impact the building components. These issues may be avoided by periodically cleaning the recoater, and the art would readily appreciate advances in tools in methods for cleaning the recoater. GB 2550341 relates to a build material distributor cleaning element. US 2016/0067929 relates to a three-dimensional fabricating apparatus.

### BRIEF DESCRIPTION

In one embodiment, a method of cleaning a recoater of an additive manufacturing machine includes installing a cleaning fixture via a build plate of the additive manufacturing machine into the additive manufacturing machine, the cleaning fixture including one or more cleaning elements, advancing the recoater into contact with the one or more cleaning elements, and rotating the recoater about a recoater axis thus dislodging material from a recoater outer surface due to frictional contact with the one or more cleaning elements.

Additionally or alternatively, in this or other embodiments the cleaning fixture is installed into the additive manufacturing machine while the recoater is positioned in a home position.

Additionally or alternatively, in this or other embodiments the recoater is advanced from the home position to a cleaning position over the one or more cleaning elements prior to advancing the recoater into contact with the one or more cleaning elements.

Additionally or alternatively, in this or other embodiments the cleaning fixture is secured to the build plate via one of a snap connection, one or more clamps or one or more bolts.

Additionally or alternatively, in this or other embodiments the build plate and the cleaning fixture are installed to a sintering piston of the additive manufacturing machine.

Additionally or alternatively, in this or other embodiments the one or more cleaning elements is one or more diamond sponges.

Additionally or alternatively, in this or other embodiments the cleaning fixture is installed into the additive manufacturing machine without defeating machine safety features.

In another embodiment, an additive manufacturing machine includes a build plate, a powder source configured to selectably distribute a powdered material at the build plate for manufacturing, and a recoater configured to advance over the item being manufactured and compress the distributed powder material. The recoater is configured to advance from a home position to contact with the item being manufactured and return to the home position, the recoater further configured to rotate about a recoater axis. A cleaning fixture for the recoater is installed to the build plate. The build plate includes one or more cleaning elements configured to remove material from an outer surface of the recoater as the recoater rotates about the recoater axis via frictional contact between the recoater and the one or more cleaning elements.

Additionally or alternatively, in this or other embodiments the cleaning fixture is secured to the build plate via one of a snap connection, one or more clamps or one or more bolts.

Additionally or alternatively, in this or other embodiments the one or more cleaning elements is one or more diamond sponges.

Additionally or alternatively, in this or other embodiments the cleaning fixture and the build plate are installable to a sintering piston of the additive manufacturing machine.

Additionally or alternatively, in this or other embodiments the cleaning fixture is installed into the additive manufacturing machine while the recoater is positioned in the home position.

Additionally or alternatively, in this or other embodiments the recoater is advanced from the home position to a cleaning position over the one or more cleaning elements prior to advancing the recoater into contact with the one or more cleaning elements.

Additionally or alternatively, in this or other embodiments the recoater is a cylindrical element.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of an additive manufacturing machine;
FIG. 2 is a schematic illustration of an embodiment of a cleaning fixture configured to clean a recoater of an additive manufacturing machine; and
FIGs. 3A-3H illustrate steps in a method of cleaning a recoater of an additive manufacturing machine.

### DETAILED DESCRIPTION

A detailed description of one or more embodiments of the disclosed apparatus and method are presented herein by way of exemplification and not limitation with reference to the Figures.

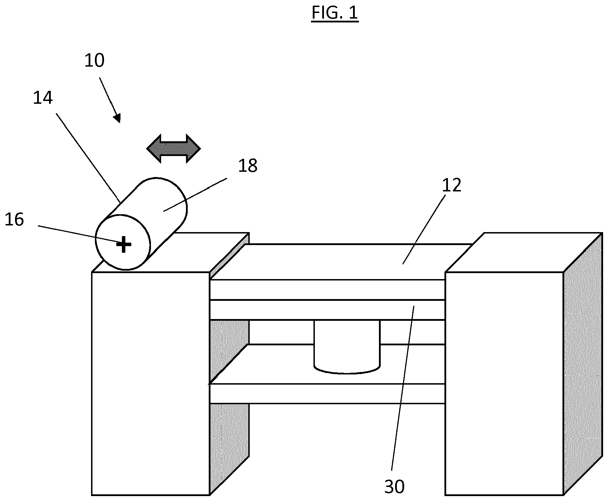

Referring to FIG. 1, shown is a schematic illustration of an additive manufacturing machine 10. The machine includes a build plate 12 upon which a workpiece (not shown) is formed by a laser powder bed fusion process. The machine 10 further includes a recoater 14. The recoater 14, in some embodiments, is a cylinder of, for example, tungsten carbide, that periodically advances across the build plate 12 to compress the powder material to improve formation of the workpiece. The recoater 14 may, for example, be formed entirely from tungsten carbide, or alternatively may have a recoater outer surface 18 formed from, for example, tungsten carbide, while an interior portion of the recoater 14 is formed from a different material. In advancing across the build plate 12, the recoater 14 may be rotated about a recoater axis 16. While in the embodiment of FIG. 1 the recoater 14 is configured to rotate about the recoater axis 16, it is to be appreciated that in other embodiments that the recoater 14 may be fixed at the recoater axis 16. Use of the recoater 14, however, leads to buildup of material powder and other debris on the recoater outer surface 18. Use of a recoater 14 with a debris buildup may lead to uneven application of pressure to the workpiece by the recoater 14, and thus uneven compression of the material powder by the recoater 14. Uneven compression may result in failure of the build of the workpiece.

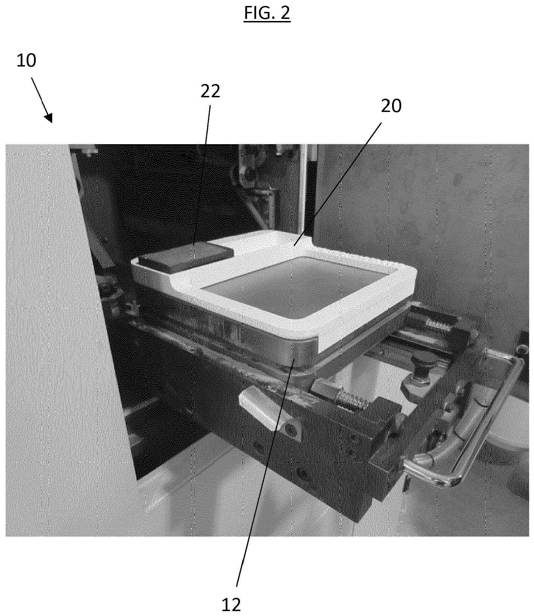

Referring now to FIG. 2, a cleaning fixture 20 is utilized to clean the recoater 14 as needed. The cleaning fixture 20 is secured to the build plate 12 by, for example, a snap fit. It is to be appreciated that in other embodiments other means may be utilized to secure the cleaning fixture 20 to the build plate 12, such as bolts, clamps, or the like. The cleaning fixture 20 includes a cleaning element 22, for example, a diamond sponge, that is configured to dislodge debris or other unwanted material from the recoater outer surface 18 when the recoater 14 is in contact with the cleaning element 22 and rotated about the recoater axis 16.

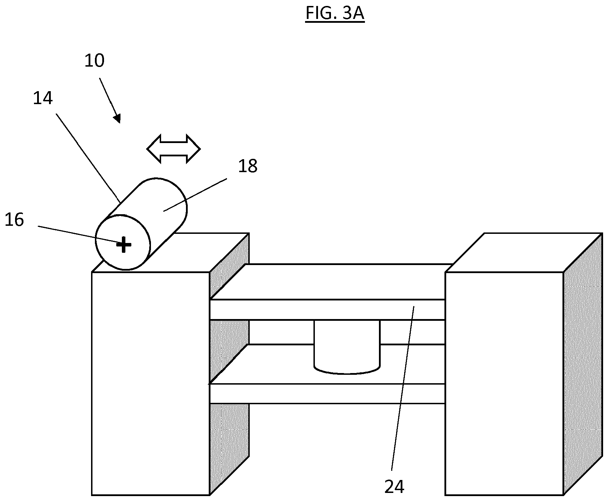

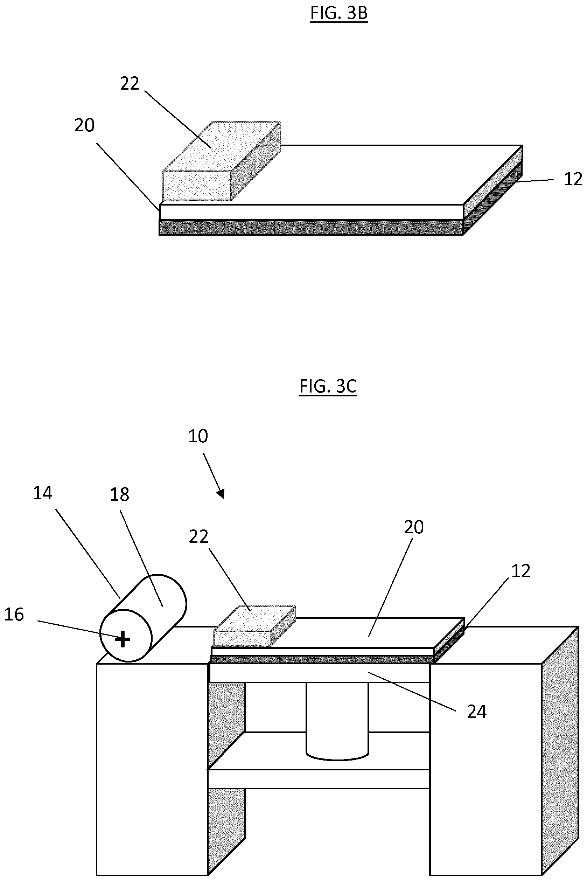

Referring now to FIGs. 3A - 3H, a method of cleaning the recoater 14 utilizing the cleaning fixture 20 will now be described. In FIG. 3A, at the beginning of the method, the recoater 14 and a sinter piston 24 are positioned in their respective home positions. In FIG. 3B, the cleaning fixture 20 including the cleaning element 22 is secured to the build plate 12 via, for example, a snap connection.

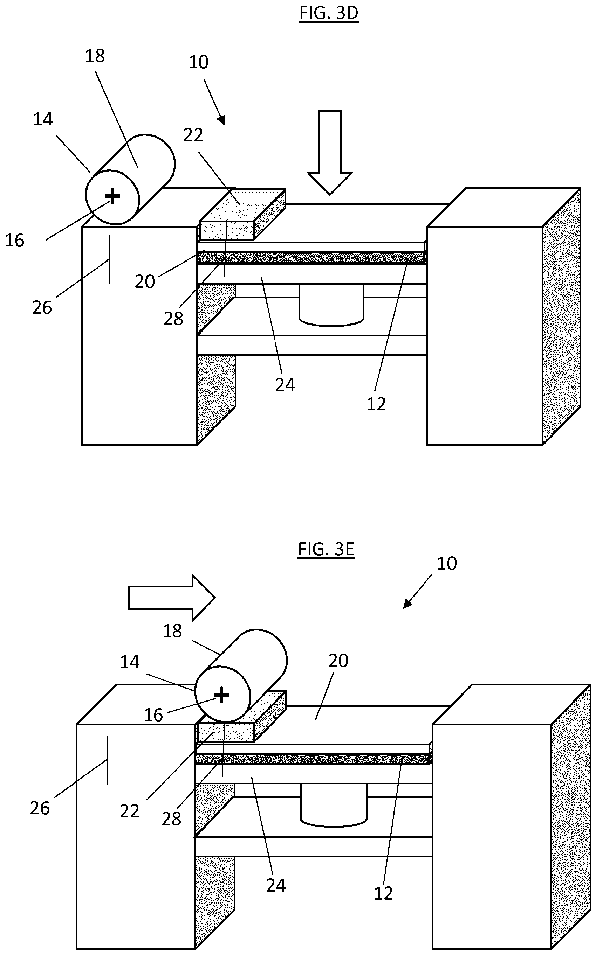

Referring now to FIG. 3C, the build plate 12 and the cleaning fixture 20 are loaded into the machine 10 and placed atop the sinter piston 24. The build plate 12 and the cleaning fixture 20 may be loaded into the machine 10 via either standard machine 10 loading procedures, or alternatively through manual methods. The loading does not require override of machine 10 safety interlocks, nor require an operator to put their hands in a live machine. In FIG. 3D, once the cleaning fixture 20 is loaded onto the sinter piston 24, the sinter piston 24 position is lowered until a sponge height of the cleaning element 22 is below the recoater outer surface 18.

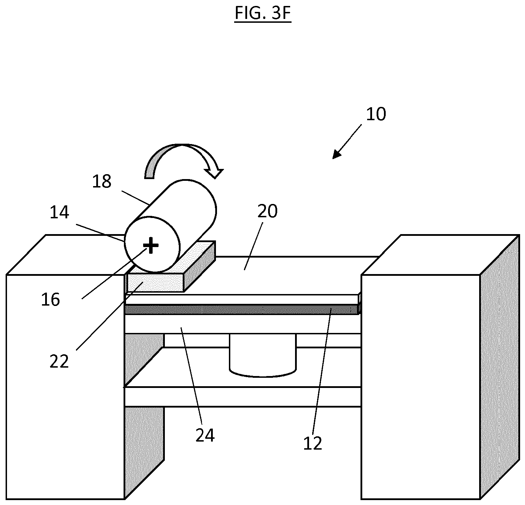

Next, as shown in FIG. 3E, the recoater 14 is advanced from its home position 26 to a cleaning position 28 over the cleaning element 22. Referring to FIG. 3F, to remove debris and other material from the recoater outer surface 18, the recoater14 is rotated about the recoater axis 16 at the cleaning element 22 such that frictional contact between the cleaning element 22 and the recoater outer surface 18 dislodges the debris, smooths out scratches or other damage in the recoater outer surface 18, and the like. The rotation of the recoater 14 may be repeated as necessary or desired, until a desired condition of the recoater outer surface 18 is achieved.

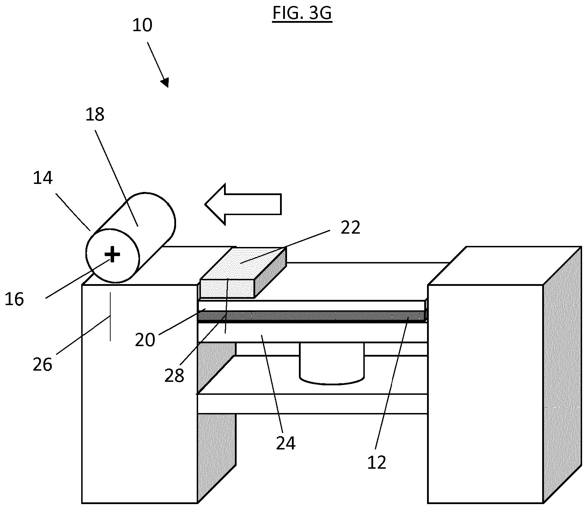

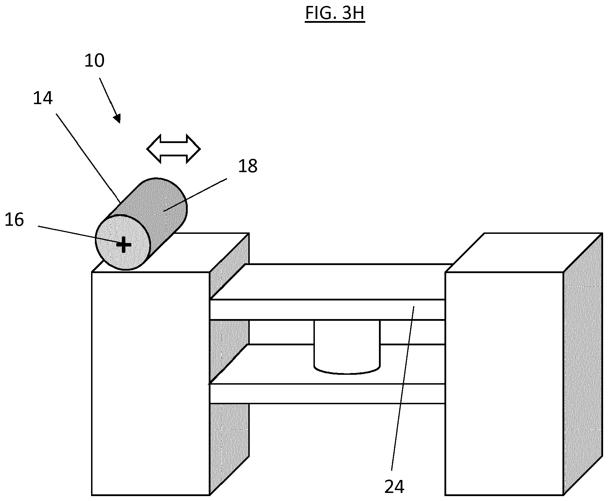

Once the selected recoater outer surface 18 condition is achieved, the recoater is returned to the home position 26 as illustrated in FIG. 3G. Finally, as shown in FIG. 3H, the cleaning fixture 20 and the build plate 12 are removed, and the machine may be returned to normal operation.

The cleaning fixture 20 and cleaning method described herein allow for repeatable, controlled cleaning of the recoater 14, thereby improving operation of the machine 10. Utilizing the cleaning fixture 20 automates the cleaning process, such that a machine operator need not defeat machine safety features and place hands in the machine 10 to achieve cleaning of the recoater 14. Further, the cleaning fixture 20 may be equipped with multiple cleaning elements 22 to reduce cleaning time of the recoater 14.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A method of cleaning a recoater (14) of an additive manufacturing machine (10), comprising:
installing a cleaning fixture (20) into the additive manufacturing machine (10), the cleaning fixture (20) including one or more cleaning elements (22);
installing the cleaning fixture via a build plate of the additive manufacturing machine;
advancing the recoater (14) into contact with the one or more cleaning elements (22); and
rotating the recoater (14) about a recoater axis (16) thus dislodging material from a recoater outer surface due to frictional contact with the one or more cleaning elements (22).

2. The method of claim 1, further comprising installing the cleaning fixture (20) into the additive manufacturing machine (10) while the recoater (14) is positioned in a home position off of the build plate.

3. The method of claim 2, further comprising advancing the recoater (14) from the home position to a cleaning position over the one or more cleaning elements (22) prior to advancing the recoater (14) into contact with the one or more cleaning elements (22).

4. The method of claim 1, wherein the cleaning fixture (20) is secured to the build plate (12) via one of a snap connection, one or more clamps or one or more bolts.

5. The method of claim 1, wherein the build plate (12) and the cleaning fixture (20) are installed to a sintering piston of the additive manufacturing machine.

6. The method of any preceding claim, wherein the one or more cleaning elements (22) is one or more diamond sponges.

7. The method of any preceding claim, wherein the cleaning fixture (20) is installed into the additive manufacturing machine (10) without defeating machine safety features.

8. An additive manufacturing machine (10) comprising:
a build plate (12);
a powder source configured to selectably distribute a powdered material at the build plate (12) for manufacturing;
a recoater (14) configured to advance over the item being manufactured and compress the distributed powder material, wherein the recoater (14) is configured to advance from a home position to contact with the item being manufactured and return to the home position, the recoater (14) further configured to rotate about a recoater axis (16); and
a cleaning fixture (20) for the recoater installable to the build plate (12), the build plate (12) including one or more cleaning elements (20) configured to remove material from an outer surface of the recoater (14) as the recoater (14) rotates about the recoater axis (16) via frictional contact between the recoater and the one or more cleaning elements (22);
**characterised in that** the cleaning fixture is secured to the build plate.

9. The additive manufacturing machine of claim 8, wherein the cleaning fixture (20) is configured to be secured to the build plate (12) via one of a snap connection, one or more clamps or one or more bolts.

10. The additive manufacturing machine of claims 8 or 9, wherein the one or more cleaning elements (22) is one or more diamond sponges.

11. The additive manufacturing machine of any of claims 8 to 10, wherein the cleaning fixture (20) and the build plate (12) are installable to a sintering piston of the additive manufacturing machine (10).

12. The additive manufacturing machine of any of claims 8 to 11, wherein the cleaning fixture (20) is configured to be installed into the additive manufacturing machine (10) while the recoater (14) is positioned in the home position.

13. The additive manufacturing machine of claim 12, is configured to advance the recoater (14) from the home position to a cleaning position over the one or more cleaning elements (22) prior to advancing the recoater (14) into contact with the one or more cleaning elements.

14. The additive manufacturing machine of any of claims 8 to 13, wherein the recoater (14) is a cylindrical element.

## Patentansprüche

1. Verfahren zur Reinigung einer Abstreichklinge (14) einer Maschine (10) zur generativen Fertigung, umfassend:
Einbauen einer Reinigungseinrichtung (20) in die Maschine (10) zur generativen Fertigung, wobei die Reinigungseinrichtung (20) ein oder mehrere Reinigungselemente (22) beinhaltet;
Einbauen der Reinigungseinrichtung über eine Bauplattform der Maschine zur generativen Fertigung;
Bewegen der Abstreichklinge (14) in Kontakt mit dem einem oder den mehreren Reinigungselementen (22); und
Drehen der Abstreichklinge (14) um eine Abstreichklingenachse (16) und somit Lösen von Material von einer Abstreichklingenaußenfläche aufgrund von Reibungskontakt mit dem einen oder den mehreren Reinigungselementen (22).

2. Verfahren nach Anspruch 1, ferner umfassend Einbauen der Reinigungseinrichtung (20) in die Maschine (10) zur generativen Fertigung, während die Abstreichklinge (14) in einer Ausgangsposition von der Bauplattform weg positioniert ist.

3. Verfahren nach Anspruch 2, ferner umfassend Bewegen der Abstreichklinge (14) aus der Ausgangsposition in eine Reinigungsposition über dem einen oder den mehreren Reinigungselementen (22) vor dem Bewegen der Abstreichklinge (14) in Kontakt mit dem einen oder den mehreren Reinigungselementen (22).

4. Verfahren nach Anspruch 1, wobei die Reinigungseinrichtung (20) über eines von einer Schnappverbindung, einer oder mehreren Klemmen und einem oder mehreren Bolzen mit der Bauplattform (12) verbunden ist.

5. Verfahren nach Anspruch 1, wobei die Bauplattform (12) und die Reinigungseinrichtung (20) an einem Sinterkolben der Maschine zur generativen Fertigung eingebaut sind.

6. Verfahren nach einem der vorangehenden Ansprüche, wobei das eine oder die mehreren Reinigungselemente (22) ein Diamantschwamm oder mehrere Diamantschwämme sind.

7. Verfahren nach einem der vorangehenden Ansprüche, wobei die Reinigungseinrichtung (20) ohne Außerkraftsetzen von Sicherheitsmerkmalen der Maschine in die Maschine (10) zur generativen Fertigung eingebaut wird.

8. Maschine (10) zur generativen Fertigung, umfassend:
eine Bauplattform (12);
eine Pulverquelle, die ausgebildet ist, um ein Pulvermaterial zur Fertigung selektiv an der Bauplattform (12) zu verteilen;
eine Abstreichklinge (14), die ausgebildet ist, um sich über den Artikel, der hergestellt wird, zu bewegen und das verteilte Pulvermaterial zusammenzudrücken, wobei die Abstreichklinge (14) ausgebildet ist, um sich aus einer Ausgangsposition in Kontakt mit dem Artikel, der hergestellt wird, zu bewegen und sich in die Ausgangsposition zurück zu bewegen, wobei die Abstreichklinge (14) ferner ausgebildet ist, um sich um eine Abstreichklingenachse (16) zu drehen; und
eine Reinigungseinrichtung (20) für die Abstreichklinge, die an der Bauplattform (12) eingebaut werden kann, wobei die Bauplattform (12) ein oder mehrere Reinigungselemente (20) beinhaltet, die ausgebildet sind, um Material von einer Außenfläche der Abstreichklinge (14) zu entfernen, während sich die Abstreichklinge (14) über den Reibkontakt zwischen der Abstreichklinge und dem einen oder den mehreren Reinigungselementen (22) um die Abstreichklingenachse (16) dreht;
**gekennzeichnet dadurch, dass**
die Reinigungseinrichtung an der Bauplattform befestigt ist.

9. Maschine zur generativen Fertigung nach Anspruch 8, wobei die Reinigungseinrichtung (20) ausgebildet ist, um über eines von einer Schnappverbindung, einer oder mehreren Klemmen oder einem oder mehreren Bolzen an der Bauplattform (12) befestigt zu werden.

10. Maschine zur generativen Fertigung nach Anspruch 8 oder 9, wobei das eine oder die mehreren Reinigungselemente (22) ein Diamantschwamm oder mehrere Diamantschwämme sind.

11. Maschine zur generativen Fertigung nach einem der Ansprüche 8 bis 10, wobei die Reinigungseinrichtung (20) und die Bauplattform (12) an einem Sinterkolben der Maschine (10) zur generativen Fertigung eingebaut werden können.

12. Maschine zur generativen Fertigung nach einem der Ansprüche 8 bis 11, wobei die Reinigungseinrichtung (20) ausgebildet ist, um in die Maschine (10) zur generativen Fertigung eingebaut zu werden, während die Abstreichklinge (14) in der Ausgangsposition positioniert ist.

13. Maschine zur generativen Fertigung nach Anspruch 12, die ausgebildet ist, um die Abstreichklinge (14) vor dem Bewegen der Abstreichklinge (14) in Kontakt mit dem einen oder den mehreren Reinigungselementen aus der Ausgangsposition in eine Reinigungsposition über dem einen oder den mehreren Reinigungselementen (22) zu bewegen.

14. Maschine zur generativen Fertigung nach einem der Ansprüche 8 bis 13, wobei die Abstreichklinge (14) ein zylindrisches Element ist.

## Revendications

1. Procédé de nettoyage d'un dispositif de réenduction (14) d'une machine de fabrication additive (10), comprenant :
l'installation d'un accessoire de nettoyage (20) dans la machine de fabrication additive (10), l'accessoire de nettoyage (20) comportant un ou plusieurs éléments de nettoyage (22) ;
l'installation de l'accessoire de nettoyage au moyen d'une plaque de montage de la machine de fabrication additive ;
l'avancement du dispositif de réenduction (14) en contact avec les un ou plusieurs éléments de nettoyage (22) ; et
la rotation du dispositif de réenduction (14) autour d'un axe de réenduction (16), délogeant ainsi le matériau d'une surface extérieure de dispositif de réenduction en raison d'un contact par frottement avec les un ou plusieurs éléments de nettoyage (22).

2. Procédé selon la revendication 1, comprenant en outre l'installation de l'accessoire de nettoyage (20) dans la machine de fabrication additive (10) tandis que le dispositif de réenduction (14) est positionné dans une position initiale hors de la plaque de montage.

3. Procédé selon la revendication 2, comprenant en outre l'avancement du dispositif de réenduction (14) de la position initiale à une position de nettoyage sur les un ou plusieurs éléments de nettoyage (22) avant l'avancement du dispositif de réenduction (14) en contact avec les un ou plusieurs éléments de nettoyage (22).

4. Procédé selon la revendication 1, dans lequel l'accessoire de nettoyage (20) est fixé à la plaque de montage (12) au moyen d'un élément parmi un assemblage par encliquetage, une ou plusieurs pinces ou un ou plusieurs boulons.

5. Procédé selon la revendication 1, dans lequel la plaque de montage (12) et l'accessoire de nettoyage (20) sont installés sur un piston de frittage de la machine de fabrication additive.

6. Procédé selon une quelconque revendication précédente, dans lequel les un ou plusieurs éléments de nettoyage (22) est une ou plusieurs éponges en losange.

7. Procédé selon une quelconque revendication précédente, dans lequel l'accessoire de nettoyage (20) est installé dans la machine de fabrication additive (10) sans rejeter les caractéristiques de sécurité de la machine.

8. Machine de fabrication additive (10) comprenant :
une plaque de montage (12) ;
une source de poudre configurée pour distribuer de manière sélective un matériau en poudre au niveau de la plaque de montage (12) destiné à la fabrication ;
un dispositif de réenduction (14) configuré pour avancer sur l'article en cours de fabrication et pour comprimer le matériau en poudre distribué, dans laquelle le dispositif de réenduction (14) est configuré pour avancer depuis une position initiale pour entrer en contact avec l'article en cours de fabrication et revenir à la position initiale, le dispositif de réenduction (14) étant en outre configuré pour tourner autour d'un axe de réenduction (16) ; et
un accessoire de nettoyage (20) destiné au dispositif de réenduction pouvant être installé sur la plaque de montage (12), la plaque de montage (12) comportant un ou plusieurs accessoires de nettoyage (20) configurés pour enlever le matériau d'une surface extérieure du dispositif de réenduction (14) lorsque le dispositif de réenduction (14) tourne autour de l'axe de dispositif de réenduction (16) au moyen d'un contact de frottement entre le dispositif de réenduction et les un ou plusieurs éléments de nettoyage (22) ;
**caractérisé en ce que**
l'accessoire de nettoyage est fixé à la plaque de montage.

9. Machine de fabrication additive selon la revendication 8, dans laquelle l'accessoire de nettoyage (20) est configuré pour être fixé à la plaque de montage (12) au moyen d'un élément parmi un assemblage par encliquetage, une ou plusieurs pinces ou un ou plusieurs boulons.

10. Machine de fabrication additive selon les revendications 8 ou 9, dans laquelle les un ou plusieurs éléments de nettoyage (22) est une ou plusieurs éponges en losange.

11. Machine de fabrication additive selon l'une quelconque des revendications 8 à 10, dans laquelle l'accessoire de nettoyage (20) et la plaque de montage (12) peuvent être installés sur un piston de frittage de la machine de fabrication additive (10).

12. Machine de fabrication additive selon l'une quelconque des revendications 8 à 11, dans laquelle l'accessoire de nettoyage (20) est configuré pour être installé dans la machine de fabrication additive (10) tandis que le dispositif de réenduction (14) est positionné dans la position initiale.

13. Machine de fabrication additive selon la revendication 12, est configurée pour faire avancer le dispositif de réenduction (14) de la position initiale à une position de nettoyage sur les un ou plusieurs éléments de nettoyage (22) avant de faire avancer le dispositif de réenduction (14) en contact avec les un ou plusieurs éléments de nettoyage.

14. Machine de fabrication additive selon l'une quelconque des revendications 8 à 13, dans laquelle le dispositif de réenduction (14) est un élément cylindrique.
